# EUROPÄISCHE PATENTSCHRIFT

(11) **EP 0 727 329 B1**
(45) Veröffentlichungstag und Bekanntmachung des Hinweises auf die Patenterteilung: **07.04.1999**
(21) Anmeldenummer: 96100959.4
(22) Anmeldetag: 24.01.1996
(51) Int. Cl.: B60H 1/00

(54) **Heizungs- und/oder Klimaanlage für ein Kraftfahrzeug**
Heating and/or air conditioning unit for a motor vehicle
Dipositif de chauffage et/ou de climatisation pour un véhicule automobile

(30) Priorität: 17.02.1995 DE 19505336
(43) Veröffentlichungstag der Anmeldung: 21.08.1996
(73) Patentinhaber: Behr GmbH & Co., D-70469 Stuttgart (DE)
(72) Erfinder: Bendell, Ian, D-71297 Mönsheim (DE); Winkelmann, Stefan, D-71634 Ludwigsburg (DE)
(74) Vertreter: Wilhelm, Peter, Dipl.-Ing.

(56) Entgegenhaltungen:
- EP-A- 0 288 379
- EP-A- 0 411 399
- EP-A- 0 423 778
- GB-A- 2 100 417

## Beschreibung

Die Erfindung betrifft eine Heizungs- und/oder Klimaanlage für ein Kraftfahrzeug mit einem Gehäuse, in dem wenigstens zwei mit jeweils einer schwenkbeweglich gelagerten Luftklappe versehene Luftführungskanäle nebeneinander angeordnet sind, sowie mit zwei außen am Gehäuse angeordneten Stelleinrichtungen, die zur Steuerung der Luftklappen vorgesehen sind, wobei die wenigstens zwei Luftklappen entlang einer gemeinsamen Schwenkachse im Gehäuse gelagert sind, und wobei zur voneinander unabhängigen Steuerung der Luftklappen den beiden Stelleinrichtungen koaxial zu der Schwenkachse angeordnete Übertragungselemente zugeordnet sind.

Eine solche Heizungs- und/oder Klimaanlage für ein Kraftfahrzeug ist aus der GB 2 100 417 A bekannt. In einem Heizungsgehäuse sind zwei Luftklappen für entsprechende Luftführungskanäle auf einer gemeinsamen Achse koaxial nebeneinander angeordnet und durch zwei auf einer Seite der Luftklappenanordnung positionierte Stelleinrichtungen unabhängig voneinander schwenkbeweglich ansteuerbar. Dabei ist die eine Luftklappe auf einer Hohlwelle angeordnet, die von einer Antriebswelle für die danebenliegende Luftklappe koxial durchsetzt wird.

Es ist auch bekannt, eine Heizungs- und/oder Klimaanlage für einen Personenkraftwagen vorzusehen, die ein mit Luftführungskanälen versehenes Gehäuse aufweist. Als Luftführungskanäle ist zum einen ein zentraler Belüftungskanal in dem Gehäuse vorgesehen, der zu beiden Seiten von jeweils einem Defrosterkanal flankiert ist. Beide den Belüftungskanal flankierenden Defrosterkanäle sind aus einem Mischraum abgezweigt. Sowohl die beiden Defrosterkanäle als auch der zentrale Belüftungskanal sind mit jeweils einer Luftklappe zur Steuerung der Luftdurchströmung versehen. Dabei sind die beiden Luftklappen der seitlichen Defrosterkanäle auf einer gemeinsamen Stellwelle angeordnet und gemeinsam durch eine Stelleinrichtung steuerbar. Die Luftklappe des zentralen Belüftungskanales ist um eine weitere, zu der Stellachse der Defrosterluftklappen parallele Stellachse mittels einer weiteren Stelleinrichtung schwenkbar.

Aufgabe der Erfindung ist es, eine Heizungs- und/oder Klimaanlage der eingangs genannten Art zu schaffen, die bei kompakter Bauweise eine einfache Ansteuerung von drei Luftklappen innerhalb des Gehäuses bei gleichzeitig guter Durchströmung der Luftführungskanäle ermöglicht.

Diese Aufgabe wird dadurch gelöst, daß in dem Gehäuse eine zentrale Luftklappe sowie zwei die zentrale Luftklappe flankierende, äußere Luftklappen angeordnet sind, daß zur gemeinsamen Steuerung der äußeren Luftklappen eine Übertragungswelle vorgesehen ist, auf der die zentrale Luftklappe drehbar gelagert ist und die zu beiden Seiten der zentralen Luftklappe drehfest mit den äußeren Luftklappen verbunden ist, wobei die Übertragungswelle wenigstens zu einer Seite hin als Hohlwelle ausgebildet ist, die wenigstens einen Radialschlitz aufweist, durch den ein Führungsnocken der zentralen Luftklappe zur drehfesten Verbindung mit der Übertragungsstange der einen Stelleinrichtung radial nach innen ragt, und wobei die eine Stelleinrichtung der zentralen Luftklappe und die andere Stelleinrichtung den beiden äußeren Luftklappen zugeordnet sind. Die Erfindung beruht auf der Erkenntnis, daß die schlechtere Durchströmung bei der bekannten Heizungs- und/oder Klimaanlage auf die den zentralen Belüftungskanal durchsetzende Stellwelle der seitlichen Defrosterklappen zurückzuführen ist, da in diesem Bereich Verwirbelungen auftreten. Durch die erfindungsgemäße Lösung wird diese Problematik beseitigt, da alle drei Luftklappen auf einer gemeinsamen Schwenkachse angeordnet sind. Dennoch werden für die drei Luftklappen lediglich zwei Stelleinrichtungen benötigt, die auf gemeinsamer Höhe angeordnet werden können, so daß die benötigte Bauhöhe für das Gehäuse verringert wird. Dies ermöglicht eine kompakte Bauweise für das Gehäuse. Die Übertragungswelle weist eine Doppelfunktion auf, indem sie zum einen als Welle für die beiden äußeren Luftklappen und zum anderen als Drehachse für die zentrale Luftklappe dient. Durch die Zuordnung der Stelleinrichtungen werden die beiden äußeren Luftklappen immer gleichzeitig um gleiche Beträge verstellt. Die zentrale Luftklappe hingegen ist unabhängig von den beiden äußeren Luftklappen durch die andere Stelleinrichtung verstellbar.

In Ausgestaltung der Erfindung sind beide Stelleinrichtungen an einer gemeinsamen Gehäuseaußenseite angeordnet, und ein der einen Stelleinrichtung zugeordneter Übertragungshebel ist drehfest mit einer Hohlwellenanordnung verbunden, auf der die beiden äußeren Luftklappen angeordnet sind und durch die eine der anderen Stelleinrichtung zugeordnete und drehfest an der anderen Luftklappe angeordnete Übertragungsstange hindurchragt. Dies ist eine einfache mechanische Lösung, die eine unabhängige Steuerung der Luftklappen ermöglicht.

In weiterer Ausgestaltung der Erfindung ist der wenigstens eine Radialschlitz über einen Umfangswinkel in der Hohlwelle ausgebildet, der dem maximal möglichen Schwenkwinkel der zentralen Luftklappe relativ zur Übertragungswelle entspricht.

Dadurch werden Anschläge gebildet, die den maximalen Schwenkwinkel der zentralen Luftklappe innerhalb des Luftführungskanales begrenzen und so im Luftführungskanal eine vollkommen geschlossene und eine vollkommen offene Position definieren.

In weiterer Ausgestaltung der Erfindung weist die zentrale Luftklappe ein rinnenartiges Profil auf, mit dem die Luftklappe auf die Übertragungswelle aufsetzbar und mittels ringartiger Sicherungselemente auf dieser sicherbar ist. Dadurch ist in einfacher Weise eine Montage und Demontage der zentralen Luftklappe ermöglicht.

In weiterer Ausgestaltung der Erfindung ist die zentrale Luftklappe einschließlich Profil und Sicherungselementen einstückig aus Kunststoff hergestellt und ist mittels der Sicherungselemente radial auf die Übertragungswelle aufklipsbar. Dadurch werden für die Befestigung der zentralen Luftklappe auf der Übertragungswelle weder Werkzeuge noch zusätzliche Befestigungselemente benötigt.

In weiterer Ausgestaltung der Erfindung sind die beiden äußeren Luftklappen an Wellenfortsätzen angeformt, die jeweils stirnseitig drehfest auf gegenüberliegende Stirnenden der Übertragungswelle aufsteckbar sind, und wenigstens der der Hohlwellenseite der Übertragungswelle zugeordnete Wellenfortsatz ist als die Übertragungsstange drehbar aufnehmender Hohlwellenfortsatz ausgebildet. Dadurch wird die Montage der verschiedenen Luftklappen weiter vereinfacht.

Weitere Vorteile und Merkmale der Erfindung ergeben sich aus den Unteransprüchen. Nachfolgend wird ein bevorzugtes Ausführungsbeispiel der Erfindung beschrieben und anhand der Zeichnungen dargestellt.
- Fig. 1: zeigt perspektivisch in vereinfachter Darstellung ein Gehäuse einer Ausführungsform einer erfindungsgemäßen Heizungs- und/oder Klimaanlage für ein Kraftfahrzeug, in dem ein zentraler Belüftungskanal von zwei seitlichen Defrosterkanälen flankiert wird,
- Fig. 2: eine Explosionsdarstellung der Luftklappenanordnung in dem Belüftungskanal und in den beiden Defrosterkanälen, wobei alle drei Luftklappen entlang einer gemeinsamen Schwenkachse angeordnet sind,
- Fig. 3: in vergrößerter Darstellung ein Stirnende einer Hohlwelle nach Fig. 2 auf Höhe des Pfeiles III und
- Fig. 4: ebenfalls in perspektivischer Darstellung, jedoch in einem anderen Maßstab, ein Stirnende eines Hohlwellenfortsatzes, an dem eine Defrosterklappe angeordnet ist.

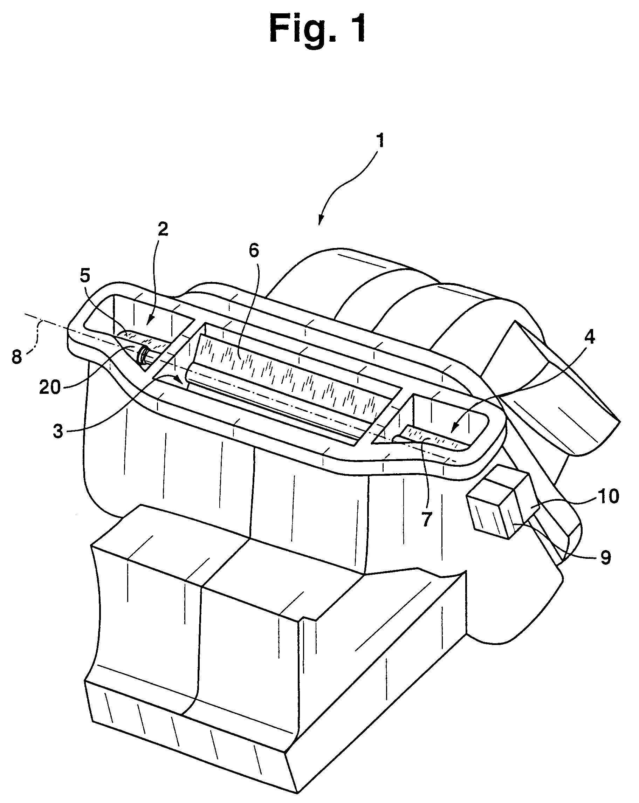

Eine Heizungs- und/oder Klimaanlage für einen Personenkraftwagen weist ein Gehäuse (1) entsprechend Fig. 1 auf, das aus Kunststoff hergestellt ist. Das Gehäuse (1) weist als zentralen Luftführungskanal einen Belüftungskanal (3) auf, der im Bereich seines Austritts zu einem Fahrzeuginnenraum des Personenkraftwagens (an sich bekannt und daher nicht dargestellt) mit einem rechteckigen Strömungsquerschnitt versehen ist. Der relativ breite Belüftungskanal (3) wird im Austrittsbereich des Gehäuses (1) zum Fahrzeuginnenraum von zwei seitliche Luftführungskanäle darstellenden Defrosterkanälen (2, 4) flankiert. Die Defrosterkanäle (2, 4) sind auf den beiden gegenüberliegenden Schmalseiten des Belüftungskanales (3) jeweils seitlich außen neben diesem angeordnet. Beide Defrosterkanäle (2, 4) weisen gleiche Strömungsquerschnitte auf, wobei diese Querschnitte jeweils trapezähnliche Form haben.

Zur Steuerung der Luftdurchströmmenge, die in den Fahrzeuginnenraum gelangen soll, weist der Belüftungskanal (3) im Austrittsbereich des Gehäuses (1) eine eine zentrale Luftklappe darstellende Belüftungsklappe (6) auf, die zwischen einer geschlossenen und einer geöffneten Endposition mittels einer an einer Gehäuseaußenseite angeordneten und lediglich schematisch dargestellten Stelleinrichtung (10) verschwenkbar ist. Auch die beiden Defrosterkanäle (2, 4) weisen jeweils eine seitliche Luftklappe in Form von zwei Defrosterklappen (5, 7) auf, die mittels einer neben der Stelleinrichtung (10) an der Gehäuseaußenseite angeordneten Stelleinrichtung (9) gemeinsam und um gleiche Schwenkwinkel zwischen die Defrosterkanäle (2, 4) freigebenden und die Defrosterkanäle (2, 4) verschließenden Endpositionen verschwenkbar sind. Die beiden Defrosterklappen (5, 7) einerseits und die zentrale Belüftungsklappe (6) andererseits sind zwar unabhängig voneinander steuerbar, sind jedoch entlang einer gemeinsamen Schwenkachse (8) angeordnet, die sich quer durch alle drei Luftführungskanäle erstreckt. Alle drei Luftklappen sind in den entsprechenden Wandungen des Gehäuses (1) gelagert und weisen plattenartige Formen auf, deren Flächen den freien Strömungsquerschnitten der jeweils zugeordneten Luftführungskanäle (2, 3, 4) entsprechen. Die gemeinsame Schwenkachse (8) verläuft etwa mittig durch die drei Luftführungskanäle (2, 3, 4), so daß sich die koaxial schwenkbaren Luftklappen (5, 6, 7) zu beiden Seiten dieser Schwenkachse (8) erstrecken. Jede Stelleinrichtung (9, 10) weist bei diesem Ausführungsbeispiel einen elektrischen Stellmotor auf, der abhängig von einer entsprechenden Regelung der Heizungs- und/oder Klimaanlage steuerbar ist.

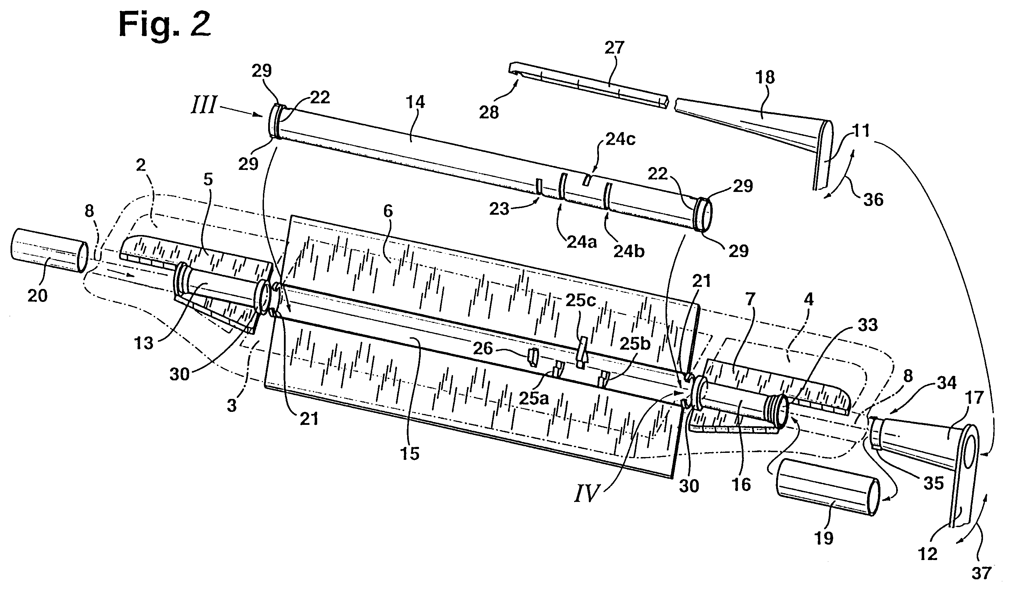

Um die unabhängige Steuerung der zentralen Belüftungsklappe (6) einerseits und der beiden seitlichen Defrosterklappen (5, 7) andererseits bei gleichzeitiger Anordnung auf einer gemeinsamen Schwenkachse zu ermöglichen, wurde die anhand der Fig. 2 bis 4 nachfolgend näher beschriebene Lageranordnung für die Belüftungsklappe (6) und die beiden Defrosterklappen (5, 7) gewählt. Beim dargestellen Ausführungsbeispiel sind alle Teile der Lageranordnung einschließlich der Luftklappen (5, 6, 7) aus Kunststoff in entsprechenden Spritzgußverfahren hergestellt. Selbstverständlich ist es jedoch auch möglich, einzelne oder alle Teile der erfindungsgemäßen Ausführungsform aus anderen geeigneten Materialien herzustellen. Die zentrale Belüftungsklappe (6) weist im Bereich ihrer Mittellängsachse, die im eingebauten Zustand der Schwenkachse (8) entspricht, ein rinnenförmiges Längsprofil (15) auf, das zur drehbaren Aufnahme einer sich über die gesamte Länge der Belüftungsklappe (6) erstreckenden und als Übertragungswelle dienenden Hohlwelle (14) vorgesehen ist. In ihrem in das Profil (15) eingebetteten Zustand verläuft die Hohlwelle (14) koaxial zur Mittellängsachse der Belüftungsklappe (6) und damit auch koaxial zur Schwenkachse (8). Um die Hohlwelle (14) in ihrer eingebetteten Position im Profil (15) der Belüftungsklappe (6) zu sichern, sind an den beiden gegenüberliegenden Stirnenden des Profils (15) zwei der Form eines offenen Rings entsprechende Sicherungsklammern (21) angeformt, die aufgrund der Kunststoffeigenschaften eine gewisse radiale Elastizität aufweisen. Zwischen diese Sicherungsklammern (21) ist die Hohlwelle (14) beim Einbetten in das Profil (15) aufklipsbar, so daß sie in ihrer vom Profil (15) teilweise ummantelten Position radial gesichert ist. Um eine axiale Verschiebung der Hohlwelle (14) relativ zur Belüftungsklappe (6) zu verhindern, sind im Bereich der gegenüberliegenden Stirnenden der Hohlwelle (14) zwei radial nach außen ragende Ringbünde (22) vorgesehen. Der Abstand der beiden an der Hohlwelle (14) angeformten Ringbündel (22) zueinander ist derart an den Anstand der gegenüberliegenden Sicherungsklammern (21) der Belüftungsklappe (6) zueinander angepaßt, daß jeder Ringbund (22) jeweils axial von außen an dem durch die jeweilige Sicherungsklammer (21) definierten Stirnende des Profils (15) und damit der Belüftungsklappe (6) anliegt. Die Montage der Hohlwelle (14) in dem Profil (15) der Belüftungsklappe (6) ist durch zwei bogenartige Pfeile verdeutlicht.

Die Drehbarkeit der Belüftungsklappe (6) relativ zur Hohlwelle (14) um die Schwenkachse (8) ist durch mehrere nachfolgend näher beschriebenen Anschläge begrenzt. Dazu sind in der Hohlwelle (14) zum einen vier Radialschlitze (23, 24a, 24b, 24c) vorgesehen, die in axialem Anstand zueinander angeordnet und teilweise in Umfangsrichtung zueinander versetzt sind. Im montierten Zustand der Hohlwelle (14) ragen vier korrespondierende Führungsnocken (26, 25a, 25b, 25c) durch die Radialschlitze (23, 24a, 24b, 24c) radial nach innen hindurch. Die Länge der vier Radialschlitze (23, 24a, 24b, 24c) in Umfangsrichtung entsprechen einander, wodurch die Führungsnocken (26, 25a, 25b, 25c) einen maximalen Schwenkbereich der Belüftungsklappe (6) relativ zur Hohlwelle (14) definieren. Dieser ist an die entsprechenden Gegebenheiten des Gehäuses (1) der Heizungs- und/oder Klimaanlage sowie an die gewünschte maximale Durchströmmenge angepaßt. Im montierten Zustand der Hohlwelle (14) im Profil (15) ragt der Führungsnocken (26) radial nach innen durch den Radialschlitz (23), der Führungsnocken (25a) durch den Radialschlitz (24a), der Führungsnocken (25b) durch den Radialschlitz (24b) und der Führungsnocken (25c) durch den Radialschlitz (24c) radial nach innen hindurch. Die drei Führungsnocken (25a, 25b, 25c) weisen in ihrem radial inneren Bereich jeweils einen Stufenabsatz auf, wobei die Führungsnocken (25a und 25b) auf gleicher Höhe und der Führungsnocken (25c) radial gegenüberliegend im Profil (15) angeordnet sind. Durch die Stufenabsätze der drei Führungsnocken (25a, 25b, 25c) wird eine radial formschlüssige Aufnahme für einen Vierkant (27) einer Übertragungsstange (18) geschaffen, die von einem Stirnende her koaxial in die Hohlwelle (14) einschiebbar ist. Beim dargestellen Ausführungsbeispiel wird die Übertragungsstange (18) - auf die Fig. 2 bezogen - vom rechten Stirnende her eingeschoben. Beim Einschieben der Übertragungsstange (18) wird der Vierkant (27) formschlüssig zwischen den Führungsnocken (25a, 25b, 25c) aufgenommen, wodurch sich eine drehfeste Verbindung zwischen der Übertragungsstange (18) und dem Profil (15) und damit der Belüftungsklappe (6) ergibt. Beim axialen Einschieben der Übertragungsstange (18) in die Hohlwelle (14) schiebt sich ein stirnseitiger Rasthaken (28) auf den als Raststelle ausgebildeten Führungsnocken (26) auf, wodurch eine verrastete Endposition der Übertragungsstange (18) in der Hohlwelle (14) und damit relativ zur Belüftungsklappe (6) definiert ist. Die Führungsnocken (25a, 25b, 25c) bilden daher zusätzlich zur Begrenzung des Schwenkbereichs der Belüftungsklappe (6) relativ zur Hohlwelle (14) eine axiale Führung für den Vierkant (27) der Übertragungsstange (18). Der Führungsnocken (26) weist ebenfalls eine Doppelfunktion auf, indem er zum einen ebenfalls zur Schwenkbereichsbegrenzung der Belüftungsklappe (6) beiträgt und zum anderen durch die Verrastung mit dem stirnseitigen Rasthaken (28) der Übertragungsstange (18) die montierte Endposition der Übertragungsstange (18) sichert. Die Übertragungsstange (18) weist an ihrem dem Rasthaken (28) gegenüberliegenden Stirnende einen radial abragenden Stellhebel (11) auf, der mit dem Stellmotor der Stelleinrichtung (9) verbunden ist. Sobald der Stellhebel (11) durch den Stellmotor der Stelleinrichtung (9) in Richtung des Doppelpfeiles (36) verschwenkt wird, wird die Übertragungsstange (18) um die Schwenkachse (8) und damit auch die drehfest mit der Übertragungsstange (18) verbundene Belüftungsklappe (6) um entsprechende Beträge verschwenkt.

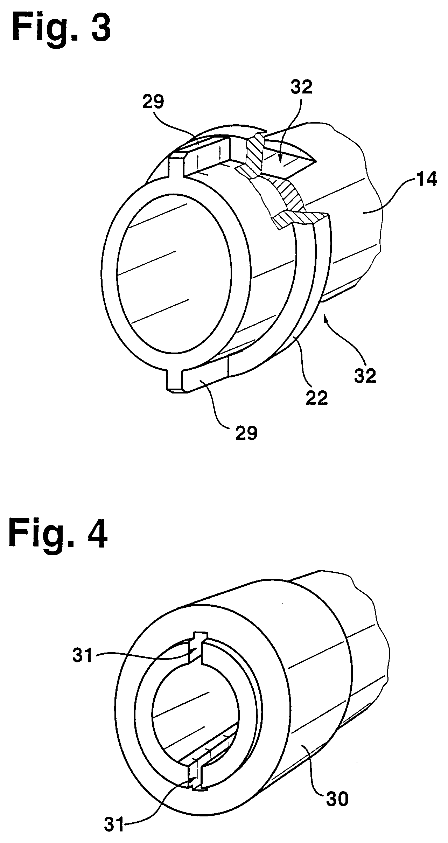

Die Übertragungsstange (18) erweitert sich in ihrem Bereich zwischen dem Vierkant (27) und dem Stellhebel (11) zum Stellhebel (11) hin konisch. Dadurch wird eine axiale Sicherung für alle weiteren zwischen der Hohlwelle (14) und der Übertragungsstange (18) befindlichen Elemente geschaffen, die nachfolgend näher beschrieben werden. Im Bereich der Sicherungsklammern (21) und der Ringbünde (22) ist jeweils eine nicht dargestellte Lagerhülse vorgesehen, mittels der die Belüftungsklappe (6) und die Hohlwelle (14) koaxial zur Schwenkachse (8) in den gegenüberliegenden Gehäusetrennwänden zwischen den Luftführungskanälen (2, 3, 4) gelagert sind. Um das Aufklipsen der Hohlwelle (15) im Bereich der Sicherungsklammern (21) zu vereinfachen, ist der Mantel der Hohlwelle (14) auf Höhe der gegenüberliegenden Sicherungsklammer (21) unmittelbar anschließend an den korrespondierenden Ringbund (22) mit jeweils zwei gegenüberliegenden Abflachungen (32) (Fig. 3) versehen. Im Bereich der gegenüberliegenden äußeren Stirnenden der Hohlwelle (14) sind außerdem zwei einander gegenüberliegende, radial nach außen ragende Sicherungsnocken (29) vorgesehen. Auf beide Stirnenden der Hohlwelle (14) ist jeweils ein mit der zugeordneten Defrosterklappe (5, 7) versehener Hohlwellenfortsatz (13, 16) aufsteckbar. Um eine drehschlüssige Steckverbindung zu erzielen, weisen die jeweils zugeordneten Stirnenden der Hohlwellenfortsätze (13, 16) (Fig. 4) den Sicherungsnocken (29) entsprechende Axialnuten (31) auf. Die Axialnuten (31) sind in jeweils einem Ring (30) mit gegenüber dem Durchmesser des Hohlwellenfortsatzes (13, 16) vergrößertem Durchmesser eingeformt. Jeder Hohlwellenfortsatz (13, 16) erstreckt sich koaxial zur Schwenkachse (8) durch den jeweiligen Defrosterkanal (2) hindurch und ist an seinem von der Hohlwelle (14) abliegenden Ende in nachfolgend noch näher beschriebener Weise relativ zum Gehäuse (1) drehbar gelagert. Der Hohlwellenfortsatz (13) ist dabei an seinem freien Stirnende in einer Lagerhülse (20) gelagert, die in der korrespondierenden Gehäusewandung des Gehäuses (1) eingebettet ist (Fig. 1). Bei einem nicht dargestellten Ausführungsbeispiel ist anstelle einer Lagerhülse eine in die Gehäusewandung eingeformte stationäre Lagerung vorgesehen.

An jedem Hohlwellenfortsatz (13, 16) angeformt ist die sich zu beiden Seiten der Schwenkachse (8) flügelartig radial und axial erstreckende Defrosterklappe (5, 7). Durch das drehschlüssige Aufstecken sowohl der Defrosterklappe (5) als auch der Defrosterklappe (7) auf die gegenüberliegenden Stirnenden der Hohlwelle (14) sind beide Defrosterklappen (5 und 7) gemeinsam mit der Hohlwelle (14) und unabhängig von der zentralen Belüftungsklappe (6) um die Schwenkachse (8) verschwenkbar. Um eine Verschwenkung der Hohlwelle (14) und damit auch der beiden Defrosterklappen (5 und 7) durch die Stelleinrichtung (10) zu bewirken, ist in das freie Stirnende (33) des Hohlwellenfortsatzes (16), durch den die Übertragungsstange (18) hindurchragt, eine Übertragungshülse (17) eingesteckt und eingerastet, die an ihrem von dem Hülsenfortsatz (16) abliegenden Stirnende einen radial abragenden Stellhebel (12) aufweist. Der Stellhebel (12) ist starr mit der Übertragungshülse (17) verbunden. Die Übertragungshülse (17) ist axial durchgehend hohl und somit auch im Bereich des Stellhebels (12) ausgespart. Im Bereich ihres zur Steck- und Rastverbindung beitragenden Stirnendes weist die Übertragungshülse (17) einen abgesetzten Bereich geringeren Durchmessers auf, der auf einer Seite im Bereich seines Mantels einen axialen Sicherungsnocken (35) und auf der gegenüberliegenden Seite einen axial nach vorne abragenden Rasthaken (34) aufweist.

Diesem Rast- und Steckbereich ist am Stirnende (33) des Hohlwellenfortsatzes (16) eine zum Sicherungsnocken (35) korrespondierende Axialnut und auf der gegenüberliegenden Seite eine entsprechende Raststelle zur Aufnahme des Rasthakens (34) vorgesehen. Die Übertragungshülse (17) ist daher in das Stirnende (33) des Hohlwellenfortsatzes (16) einsteckbar und durch die Verrastung im eingestecktem Zustand axial gesichert. Der Sicherungsnocken (35) gewährleistet gleichzeitig eine drehschlüssige Verbindung mit dem Hohlwellenfortsatz (16).

Die Übertragungshülse (17) weist eine sich zwischen dem Rast- und Steckbereich und dem Stellhebel (12) konisch erweiternde Wandung auf, wobei das Innere der Übertragungshülse (17) an den sich konisch erweiternden Bereich der Übertragungsstange (18) angepaßt ist, so daß die Übertragungshülse (17) den konisch erweiterten Bereich der Übertragungsstange (18) frei drehbar aufnehmen kann. Der maximale Außendurchmesser des konisch erweiterten Bereichs der Übertragungsstange (18) ist geringer als der maximale Innendurchmesser der Übertragungshülse (17). Außerdem weist die Übertragungsstange (18) im Bereich des Stellhebels (11) in nicht dargestellter Weise einen Anschlagbund auf, der sich axial an dem zugeordneten Stirnende der Übertragungshülse (17) abstützt. Durch diese Maßnahmen wird ein Verklemmen der Übertragungsstange (18) innerhalb der Übertragungshülse (17) vermieden. Die Übertragungshülse (17) wiederum ist in einer Lagerhülse (19) frei drehbar gelagert, die in einer entsprechenden Gehäusewandung gehalten ist. Bei der Montage der Übertragungshülse (17) wird daher zunächst auf die Übertragungshülse (17) die Lagerhülse (19) aufgeschoben und anschließend die Übertragungshülse (17) in den Hohlwellenfortsatz (16) eingesteckt. Die Länge der Übertragungsstange (18), d.h. der Abstand zwischen dem Rasthaken (28) und dem nicht dargestellten Anschlagbund der Übertragungsstange (18) entspricht etwa dem Abstand des Stirnendes der Übertragungshülse (17) im Bereich des Stellhebels (12) zum Führungsnocken (26) in dem Profil (15) der Belüftungsklappe (6) im montierten Zustand. Dadurch sichert die Übertragungsstange (18) sowohl den Hohlwellenfortsatz (16) als auch die Übertragungshülse (17) im aufgesteckten Zustand axial gegen ein Lösen von der Hohlwelle (14).

Durch eine Verschwenkung des Stellhebels (12) mittels eines Stellmotors der Stelleinrichtung (9) in Richtung des Doppelpfeiles (37) um die Schwenkachse (8) werden daher die Hohlwelle (14) und damit auch beide Defrosterklappen (5, 7) gleichzeitig und um gleiche Schwenkwinkel verschwenkt. Da gleichzeitig jedoch die Belüftungsklappe (6) zumindest in dem begrenzten Schwenkwinkelbereich frei drehbar auf der Hohlwelle (14) gelagert ist, ist eine unabhängige Steuerung, d.h. Verschwenkung der Belüftungsklappe (6), durch die Stelleinrichtung (10) möglich. Der relative Schwenkwinkelbereich zwischen der Hohlwelle (14) und der Belüftungsklappe (6), der durch die Länge der Radialschlitze (23, 24a bis 24c) definiert ist, ist dabei so gewählt, daß auch bei bereits bis in die maximale Endposition verschwenkten Defrosterklappe (5 und 7) noch eine vollständige Beweglichkeit der Belüftungsklappe (6) zwischen ihren beiden Endpositionen möglich ist. In umgekehrter Weise sind die Positionen und Längen der kreisbogenförmigen Radialschlitze (23, 24a bis 24c) so gewählt, daß auch bei einer Stellung der Belüftungsklappe (6) in ihrer maximalen Endposition noch eine volle Beweglichkeit der Defrosterklappen (5 und 7) gewährleistet ist.

Durch die erfindungsgemäße Lösung wird eine äußerst kompakte Gestaltung der Luftklappenanordnungen erzielt, die eine Reduzierung des Bauraumes des Gehäuses (1) gestattet. Da zudem alle Luftklappen eine gemeinsame Schwenkachse aufweisen, werden Wirkungsgradverluste bei der Umströmung einer einen Strömungsraum vor einer Luftklappe durchsetzenden Stellwelle vermieden.

Bei dem zuvor beschriebenen Ausführungsbeispiel, gemäß der Fig. 1 bis 4, sind die Stelleinrichtungen (9) und (10) an einer gemeinsamen Seite des Gehäuses (1) angeordnet. Bei anderen erfindungsgemäßen Ausführungsbeispielen sind die Stelleinrichtungen räumlich voneinander getrennt auf gegenüberliegenden Seiten des Gehäuses vorgesehen.

## Patentansprüche

1. Heizungs- und/oder Klimaanlage für ein Kraftfahrzeug, mit einem Gehäuse, in dem wenigstens zwei mit jeweils einer schwenkbeweglich gelagerten Luftklappe versehene Luftführungskanäle nebeneinander angeordnet sind, sowie mit zwei außen am Gehäuse angeordneten Stelleinrichtungen, die zur Steuerung der Luftklappen vorgesehen sind, wobei die wenigstens zwei Luftklappen (5, 6, 7) entlang einer gemeinsamen Schwenkachse (8) im Gehäuse (1) gelagert sind, und wobei zur voneinander unabhängigen Steuerung der Luftklappen (5, 6, 7) den beiden Stelleinrichtungen (9, 10, 11, 12) koaxial zu der Schwenkachse (8) angeordnete Übertragungselemente (14, 15, 16, 17, 18, 25a, 25b, 25c, 26, 27) zugeordnet sind,
**dadurch gekennzeichnet, daß**
in dem Gehäuse (1) eine zentrale Luftklappe (6) sowie zwei die zentrale Luftklappe (6) flankierende, äußere Luftklappen (5, 7) angeordnet sind, daß zur gemeinsamen Steuerung der äußeren Luftklappen (5, 7) eine Übertragungswelle (14) vorgesehen ist, auf der die zentrale Luftklappe (6) drehbar gelagert ist und die zu beiden Seiten der zentralen Luftklappe (6) drehfest mit den äußeren Luftklappen (5, 7, 13, 16) verbunden ist, wobei die Übertragungswelle (14) wenigstens zu einer Seite hin als Hohlwelle ausgebildet ist, die wenigstens einen Radialschlitz (23, 24a bis 24c) aufweist, durch den ein Führungsnocken (25a bis 25c, 26) der zentralen Luftklappe (6) zur drehfesten Verbindung mit der Übertragungsstange (18, 27) der einen Stelleinrichtung (9, 11) radial nach innen ragt, und wobei die eine Stelleinrichtung (9, 11) der zentralen Luftklappe (6) und die andere Stelleinrichtung (10, 12) den beiden äußeren Luftklappen (5, 7) zugeordnet sind.

2. Heizungs- und/oder Klimaanlage nach Anspruch 1, dadurch gekennzeichnet, daß beide Stelleinrichtungen (9, 10, 11, 12) an einer gemeinsamen Gehäuseaußenseite angeordnet sind, und daß ein der einen Stelleinrichtung (9) zugeordneter Übertragungshebel (12) drehfest mit einer Hohlwellenanordnung (14, 16, 17) verbunden ist, auf der die beiden äußeren Luftklappen (5, 7) angeordnet sind und durch die eine der anderen Stelleinrichtung (10) zugeordnete und drehfest an der anderen Luftklappe (6) angeordnete Übertragungsstange (18, 27) hindurchragt.

3. Heizungs- und/oder Klimaanlage nach Anspruch 1, dadurch gekennzeichnet, daß der wenigstens eine Radialschlitz (23, 24a bis 24c) über einen Umfangswinkel in der Hohlwelle (14) ausgebildet ist, der dem maximal möglichen Schwenkwinkel der Luftklappen (5, 6, 7) zueinander entspricht.

4. Heizungs- und/oder Klimaanlage nach Anspruch 3, dadurch gekennzeichnet, daß die zentrale Luftklappe (6) ein rinnenartiges Profil (15) aufweist, mit dem die Luftklappe (6) auf die Übertragungswelle (14) aufsetzbar und mittels ringartiger Sicherungselemente (21) auf dieser sicherbar ist.

5. Heizungs- und/oder Klimaanlage nach Anspruch 4, dadurch gekennzeichnet, daß die zentrale Luftklappe (6) einschließlich Profil (15) und Sicherungselement (21) einstückig aus Kunststoff hergestellt ist und mittels der Sicherungselemente (21) radial auf die Übertragungswelle (14) aufklipsbar ist.

6. Heizungs- und/oder Klimaanlage nach Anspruch 5, dadurch gekennzeichnet, daß die beiden äußeren Luftklappen (5, 7) an Wellenfortsätzen (13, 16) angeformt sind, die jeweils stirnseitig drehfest auf gegenüberliegende Stirnenden der Übertragungswelle (14) aufsteckbar sind, und daß wenigstens der der Hohlwellenseite der Übertragungswelle (14) zugeordnete Wellenfortsatz (16) als die Übertragungsstange (18, 27) drehbar aufnehmender Hohlwellenfortsatz ausgebildet ist.

## Claims

1. A heating and/or air-conditioning system for a motor vehicle, having a housing, in which at least two air delivery passages each with a swivel-mounted air valve are arranged adjacent to one another and with two regulating devices disposed on the exterior of the housing provided as a means of controlling the air valves, the air valves (5, 6, 7), of which there are at least two, being mounted along a common swivel axis (8) in the housing (1) and transmission elements (14, 15, 16, 17, 18, 25a, 25b, 25c, 26, 27) disposed coaxially with the swivel axis (8) are assigned to the two regulating devices (9, 10, 11, 12) in order to control the air valves (5, 6, 7) independently of one another,
**characterised in that**
a central air valve (6) as well as two outer air valves (5, 7) flanking the central air valve (6) are arranged in the housing (1), in that, in order to control the outer air valves (5, 7) jointly, a transmission shaft (14) is provided on which the central air valve (6) is rotatably mounted and which is joined in rotation to the outer air valves (5, 7, 13, 16) on either side of the central air valve (6), the transmission shaft (14) being provided at least at one end as a hollow shaft, having at least one radial slit (23, 24a to 24c), through which a guide cam (25a to 25c, 26) of the central air valve (6) projects radially towards the interior as far as the connection joining the transmission rod (18, 27) of the one regulating device (9, 11) in rotation and whereby the one regulating device (9, 11) is assigned to the central air valve (6) and the other regulating device (10, 12) is assigned to the two outer air valves (5, 7).

2. A heating and/or air-conditioning system as claimed in claim 1, characterised in that both regulating devices (9, 10, 11, 12) are arranged on a common external face of the housing and that a transmission lever (12) assigned to the one regulating device (9) is joined so that it rotates with a hollow shaft arrangement (14, 16, 17), on which the two outer air valves (5, 7) are arranged and projecting through which is a transmission rod (18, 27) assigned to the other regulating device (10) arranged on and joined in rotation to the other air valve (6).

3. A heating and/or air-conditioning system as claimed in claim 1, characterised in that the at least one radial slit (23, 24a to 24c) is disposed across a circumferential angle in the hollow shaft (14) which corresponds to the maximum swivel angle of the air valves (5, 6, 7) relative to one another.

4. A heating and/or air-conditioning system as claimed in claim 3, characterised in that the central air valve (6) has a ring-shaped profile (15), by means of which the air valve (6) can be seated on the transmission shaft (14) and secured thereon by means of ring-shaped fixing elements (21).

5. A heating and/or air-conditioning system as claimed in claim 4, characterised in that the central air valve (6) including profile (15) and fixing elements (21) is made in one piece from a synthetic material and can be clipped radially by means of the fixing elements (21) on to the transmission shaft (14).

6. A heating and/or air conditioning system as claimed in claim 5, characterised in that the two outer air valves (5, 7) are formed on shaft extensions (13, 16) each of which can be attached at the end face to be joined in rotation to oppositely lying ends of the transmission shaft (14) and in that at least the shaft extension (16) assigned to the hollow end of the transmission shaft (14) is provided as the hollow shaft extension which rotatably receives the transmission rod (18, 27).

## Revendications

1. Dispositif de chauffage et/ou de climatisation pour un véhicule automobile, comportant une carrosserie dans laquelle sont disposés, l'un à côté de l'autre, au moins deux canaux de guidage de l'air munis chacun d'un volet d'aération porté avec liberté de pivotement, ainsi que deux organes de réglage qui sont disposés sur la carrosserie, à l'extérieur, et sont prévus pour manoeuvrer les volets d'aération, dans lesquels au moins deux volets d'aération (5, 6, 7) sont portés dans la carrosserie (1) le long d'un axe de pivotement commun (8) et dans lequel des éléments de transmission (14, 15, 16, 17, 18, 25a, 25b, 25c, 26, 27) disposés coaxialement à l'axe de pivotement (8), sont associés aux deux organes de réglage (9, 10, 11, 12) pour manoeuvrer les volets d'aération (5, 6, 7) indépendamment l'un de l'autre,
caractérisé par le fait que dans la carrosserie (1) sont disposés un volet d'aération central (6) ainsi que deux volets d'aération extérieurs (5, 7) flanquant le volet d'aération central (6), que pour la manoeuvre commune des volets d'aération extérieurs (5, 7) est prévu un arbre de transmission (14) sur lequel le volet d'aération central est porté avec liberté de rotation et qui est relié, sans liberté de rotation relative, aux volets d'aération extérieurs (5, 7, 13, 16) des deux côtés du volet d'aération central (6), l'arbre de transmission (14) étant conçu, au moins d'un côté, sous forme d'arbre creux qui présente au moins une fente radiale (23, 24a à 24c) par laquelle un mentonnet de guidage (25a à 25c, 26) du volet d'aération central (6) pénètre radialement vers l'intérieur pour la liaison, sans liberté de rotation relative, avec le barreau de transmission (18, 27) du premier organe de réglage (19, 11), et le premier organe de réglage (19, 11) étant associé au volet d'aération central (6) et l'autre organe de réglage (10, 12) étant associé aux deux volets d'aération extérieurs (5, 7).

2. Dispositif de chauffage et/ou de climatisation selon la revendication 1, caractérisé par le fait que les deux organes de réglage (9, 10, 11, 12) sont disposés sur une face extérieure commune de la carrosserie et qu'un lever de transmission (12), associé au premier organe de réglage (9) est relié, sans liberté de rotation relative, à un arrangement d'arbre creux (14, 16, 17) sur lequel sont disposés les deux volets d'aération extérieurs (5, 6, 7) et à travers lequel passe un barreau de transmission (18, 27) associé à l'autre organe de réglage (10) et disposé sans liberté de rotation relative avec l'autre volet d'aération (6).

3. Dispositif de chauffage et/ou de climatisation selon la revendication 1, caractérisé par le fait que la fente radiale (23, 24a à 24c), dont il y a au moins une, est prévue, sur l'arbre creux (14), sur un angle périphérique qui correspond à l'angle maximal possible de pivotement des volets d'aération (5, 6, 7) l'un par rapport à l'autre.

4. Dispositif de chauffage et/ou de climatisation selon la revendication 3, caractérisé par le fait que le volet d'aération central (6) présente un profil en forme de rigole (15) par lequel le volet d'aération (6) peut avoir son assise sur l'arbre de transmission (14) et être assuré sur cet arbre au moyen d'éléments annulaires de sécurité (21).

5. Dispositif de chauffage et/ou de climatisation selon la revendication 4, caractérisé par le fait que le volet d'aération central (6) est fabriqué d'une seule pièce en plastique, y compris profil (15) et élément de sécurité (21) et peut se clipser radialement sur l'arbre de transmission (14) au moyen des éléments de sécurité (21).

6. Dispositif de chauffage et/ou de climatisation selon la revendication 5, caractérisé par le fait que les deux volets d'aération extérieurs (5, 7) sont formés sur des prolongements (13, 16) de l'arbre qui peuvent chacun s'enficher, côté frontal et sans liberté de rotation relative, sur des extrémités frontales opposées de l'arbre de transmission (14), et qu'au moins le prolongement (16) associé au côté arbre creux de l'arbre de transmission (14) est conçu sous forme d'un prolongement d'arbre creux recevant, avec liberté de rotation relative, le barreau de transmission (18, 27).
